Europäisches Patentamt

European Patent Office

Office européen des brevets

(19)

(11) Veröffentlichungsnummer : **0 069 280**
**B1**

(12) # EUROPÄISCHE PATENTSCHRIFT

(45) Veröffentlichungstag der Patentschrift :
28.11.84

(21) Anmeldenummer : 82105536.5

(22) Anmeldetag : 24.06.82

(51) Int. Cl.³ : **B 60 T 17/22**

(54) Anzeigevorrichtung für Fahrzeugbremsen, insbesondere Scheibenbremsen von Schienenfahrzeugen.

(30) Priorität : 02.07.81 DE 3126153

(43) Veröffentlichungstag der Anmeldung :
12.01.83 Patentblatt 83/02

(45) Bekanntmachung des Hinweises auf die Patenterteilung : 28.11.84 Patentblatt 84/48

(84) Benannte Vertragsstaaten :
AT CH DE FR IT LI

(56) Entgegenhaltungen :
DE-B- 1 282 052
FR-A- 1 467 528
FR-A- 2 137 779

(73) Patentinhaber : **Knorr-Bremse GmbH**
**Moosacher Strasse 80**
**D-8000 München 40 (DE)**

(72) Erfinder : **Woseglen, Bernd**
**Ringseisstrasse 8**
**D-8000 München 2 (DE)**

Jouve, 18, rue St-Denis, 75001 Paris, France

## Beschreibung

Die Erfindung betrifft eine Anzeigevorrichtung gemäß dem Oberbegriff des Anspruches 1.

Es sind Anzeigevorrichtungen bekannt, beispielweise die Anzeigevorrichtung AZ6 der Deutschen Bundesbahn, die aus einem Gehäuse und einem Fenster bestehen. In dem Gehäuse befindet sich ein Zylinder mit einem Druckluftanschluß, der an eine Rohrleitung angeschlossen ist, welche den den Bremszylindern zuzuführenden Bremszylinderdruck führt. Der dem Bremsdruck proportionale Bremszylinderdruck stellt hierbei zugleich den Signaldruck dar. Im Zylinder ist ein Kolben mit einer Kolbenstange verschieblich, die durch den dem Druckluftanschluß gegenüberliegenden Zylinderboden geführt ist. Im Zylinder ist eine Feder vorhanden, die den Kolben belastet und sich innen am Zylinderboden abstützt. Außerhalb des Zylinders ist an der Kolbenstange ein Schauzeichen festgehalten, das in zwei Farbfelder « grün » und « rot » unterteilt ist. Ist der Zylinder entlüftet, befindet sich der Kolben unter der Kraft der ihn belastenden Feder in seiner unteren Endstellung, in der das Schauzeichen mit seinem grünen Farbfeld vor einem Fenster steht. Hierdurch wird angezeigt, daß die Bremse gelöst ist. Ist der Zylinder mit Druckluft beaufschlagt, befindet sich der Kolben entgegen der Kraft der Feder in seiner anderen Endstellung, in der das Schauzeichen mit seinem roten Farbfeld vor dem Fenster erscheint. Hierdurch wird angezeigt, daß die Bremse eingebremst ist. Der Kolbendurchmesser und die Kraft der Feder sind im allgemeinen derart aufeinander abgestimmt, daß diese Anzeigevorrichtungen bei einem Bremszylinderdruck von ca. 0,5 oder 0,6 bar von der grünen Anzeige (Bremse gelöst) auf die rote Anzeige (Bremse betätigt) umschalten, wobei die Umschaltung in beiden Schaltrichtungen etwa in diesem Druckbereich erfolgt.

Die Druckmittelbremsen von Schienenfahrzeugen weisen insbesondere aufgrund mechanischer Kolben- und Gestängereibungen des Bremsgestänges eine gewisse Hysterese hinsichtlich der Bremskraft zwischen Einbrems- und Bremslösevorgängen auf, derart, daß beispielsweise beim Einbremsen erst bei Erreichen eines Bremszylinderdruckes von ca. 0,5 bar die Fahrzeugbremsen anlegen und eine gewisse Bremskraft ausüben, bei Bremslösevorgängen dagegen bis zum Absenken des Bremszylinderdruckes auf ca. 0,2 bar angelegt bleiben und eine merkliche Bremskraft erzeugen, also erst unterhalb ca. 0,2 bar völlig gelöst sind. Im Hinblick auf diese Hysterese und das in beiden Richtungen erfolgende, wenigstens nahezu hysteresefreie Schalten der bekannten Anzeigevorrichtungen ist mit den bekannten Anzeigevorrichtungen eine exakte Anzeige, ob die Fahrzeugbremse gelöst oder gebremst ist, nicht möglich :

Während Lösevorgängen zeigen diese Anzeigevorrichtungen beim Unterschreiten eines Bremszylinderdrucks von ca. 0,5 bar gelöste Bremsen an, während die Bremse bis zum Unterschreiten von ca. 0,2 bar angelegt verbleibt ; im Bereich von 0,5 bis 0,2 bar erfolgt also bei Lösevorgängen eine Fehlanzeige.

Es stellt sich daher bei den bekannten Anzeigevorrichtungen das Problem, daß eindeutig erkennbar ist, ob die Fahrzeuge sicher gelöst sind, um einerseits Verschiebeschwierigkeiten und andererseits die Überbeanspruchungen der eventuell noch ganz schwach eingebremsten Scheibenbremse im Betrieb sicher vermeiden zu können. Aus Sicherheitsgründen ist es aber ebenso wichtig, daß der Anzeigevorrichtung eindeutig entnommen werden kann, ob die Fahrzeuge sicher eingebremst sind.

Aufgabe der Erfindung ist es daher, eine Anzeigevorrichtung der eingangs bezeichneten Art mit den beiden Anzeigen « gebremst » und « gelöst » anzugeben, die trotz der Hysterese der Bremsen hinsichtlich der Bremskraft zwischen Einbrems- und Bremslösevorgängen sicher zu erkennen gibt, ob die Bremse gelöst oder gebremst ist.

Diese Aufgabe der Erfindung wird mit den kennzeichnenden Merkmalen des Anspruches 1 gelöst.

Durch diese Ausbildung der Anzeigevorrichtung wird erreicht, daß die Anzeigevorrichtung beim Anlegen der Bremsen erst dann von der Anzeige « gelöst » auf die Anzeige « gebremst » umschaltet, wenn in den Bremszylindern ein Druck aufgebaut ist, der sicherstellt, daß die Bremsen angelegt sind und daß die Anzeigevorrichtung beim Lösen der Bremsen erst dann von der Anzeige « gebremst » auf die Anzeige « gelöst » umschaltet, wenn der Druck in den Bremszylindern auf einen Wert abgebaut ist, bei dem die Bremsen sicher gelöst sind, wobei dieser Bremszylinderdruck beim Lösen der Bremsen wesentlich niedriger liegen kann als der zum sicheren Anlegen der Bremsen erforderliche Mindestdruck in den Bremszylindern.

Vorteilhafte Ausführungen und Weiterbildungen nach der Erfindung ergeben sich aus den Merkmalen der Unteransprüche und/oder der nachfolgenden Beschreibung für bevorzugte Ausführungsbeispiele, die in einer schematischen Zeichnung dargestellt sind. Hierin zeigt jeweils in schematischer Darstellung.

Figur 1 ein erste Ausführungsbeispiel einer erfindungsgemäßen Anzeigevorrichtung und

Figur 2 ein zweites Ausführungsbeispiel einer erfindungsgemäßen Anzeigevorrichtung.

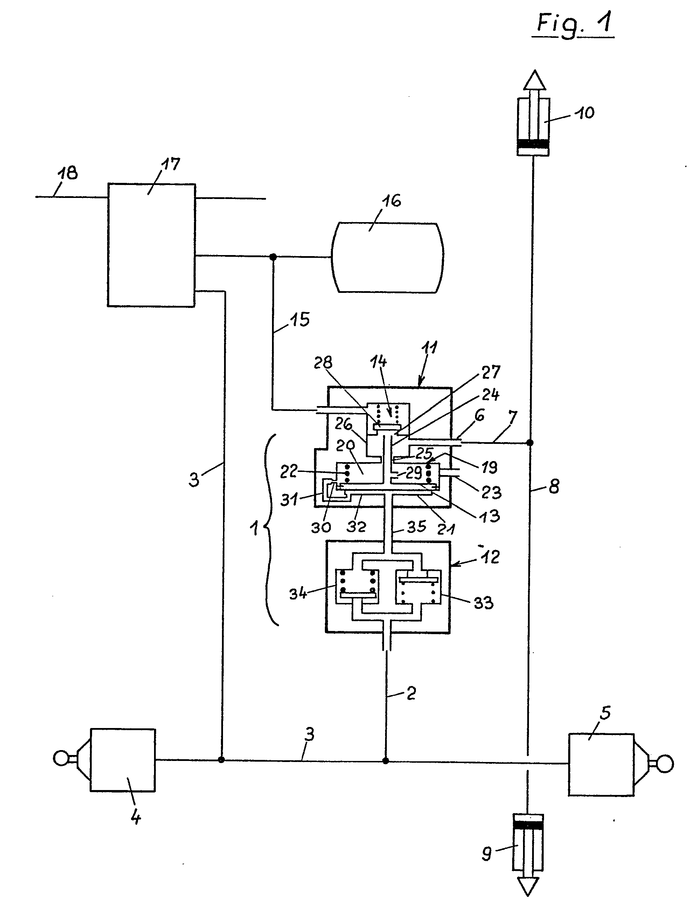

Fig. 1 zeigt eine erfindungsgemäße Schaltvorrichtung 1, die über eine Signaldruckleitung 2 an eine Bremsluftleitung 3 angeschlossen ist, welche an die Druckluftanschlüsse zweier Bremszylinder 4 und 5 geführt ist. Der in der Bremsluftleitung 3 herrschende Druck dient als Signaldruck für die Schaltvorrichtung 1, deren Ausgang 6 über eine Ausgangsleitung 7 an eine Anzeigeleitung 8 angeschlossen ist, die an die Druckluftanschlüsse zweiter Anzeigezylinder 9 und 10 geführt ist. Die an sich bekannten Anzeigezylinder 9 und 10 sind in Fig. 1 nur schematisch angedeutet. Jeder der eingangs beschriebenen Anzeigezylinder ist in einem Gehäuse mit einem Sichtfenster angeordnet, das hier der Einfachheit halber nicht dargestellt ist.

Die Anzeigezylinder können, wie gesagt, z. B. auf einen Schaltpunkt von 0,6 bar augelegt sein. Dabei erfolgt die Umschaltung in beiden Schaltrichtungen im wesentlichen hysteresefrei.

Ohne die erfindungsgemäße Schaltvorrichtung 1 würden aber aufgrund der Hysterese der Fahrzeugbremsen falsche Anzeigen der Anzeigenzylinder nicht vermeidbar sein.

Die erfindungsgemäße Schaltvorrichtung 1 besteht nach dem Ausführungsbeispiel gemäß Fig. 1 aus einem Relaisventil 11 und einem dem Relaisventil 11 vorgeschalteten Überströmventil 12. Das Relaisventil beinhaltet einen Steuerkolben 13 und ein Schaltventil 14. Das Schaltventil 14 ist in eine Hilfsluftleitung 15 eingeordnet, die zu einem Hilfsluftbehälter 16 geführt ist. Die Hilfsluftleitung 15 schließt an die Ausgangsleitung 7 der Schaltvorrichtung 1 an. Der Hilfsluftbehälter 16 ist an ein bekanntes Bremssteuerventil 17 angeschlossen, das in Abhängigkeit vom Druck in der Hauptluftleitung 18 den Bremsdruck in der Bremsluftleitung 3 steuert.

Der Steuerkolben 13 des Relaisventils befindet sich in einer Steuerkammer 19. Der Steuerkolben 13 unterteilt die Steuerkammer 19 in zwei Räume 20 und 21. In dem Raum 20 befindet sich eine Feder 22, die den Steuerkolben belastet. Außerdem ist der Raum 20 über eine Öffnung 23 ständig entlüftet. Der Steuerkolben 13 steht mit einem Ventilrohr 24 in Verbindung, das durch eine weitere Öffnung 25 im Raum 20 druckdicht verschlieblich hindurchgeführt ist und ragt mit seinem offenen Ende in einen Schaltraum 26 des Schaltventils 14. In dem Schaltraum 26 befindet sich ein Ventilsitz 27, der von einer federbelasteten Ventilplatte 28 in Abschlußstellung gehalten ist und entgegen der Federkraft durch das Ventilrohr 24 von dem Ventilsitz abgehoben werden kann. In der Schließstellung des Schaltventils 14 ist der Anschluß der Hilfsluftleitung 15 an die Ausgangsleitung 7 der Schaltvorrichtung 1 unterbrochen. Das Ventilrohr 24 besitzt in einem Rohrabschnitt, der in dem Raum 20 der Steuerkammer 19 verbleibt, eine seitliche Öffnung 29. Ist der Raum 21 der Steuerkammer 19 drucklos und befindet sich demzufolge der Steuerkolben 13 durch die Kraft der Feder 22 in seiner einen, in Fig. 1 gezeigten, unteren Schaltstellung, dann befindet sich das Schaltventil 14 in seiner Schließstellung. Der zur einen Seite der Ventilplatte 28 liegende, an die Ausgangsleitung 7 angeschlossene Teil des Schaltraumes 26 und mit ihm die Anzeigedruckleitung 8 sind über das Ventilrohr 24 mit seiner seitlichen Offnung 29 entlüftet. Demgemäß sind auch die Anzeigezylinder 9 und 10 entlüftet, so daß sich jeweils die grünen Schauzeichen hinter den Sichtfenstern befinden, wodurch die Lösestellung der Fahrzeugbremsen angezeigt ist.

Die Steuerkammer 19 besitzt eine weitere Öffnung 30, die einen relativ kleinen Öffnungsquerschnitt besitzt. Die Öffnung 30 ist durch einen Kanal 31 an den einen Boden 32 der Steuerkammer 19 angeschlossen, der von der federbelasteten Fläche des Steuerkolbens 13 abgewandt ist. Befindet sich der Steuerkolben 13 in seiner einen Schaltstellung entsprechend der Darstellung in Fig. 1, dann ist der Raum 21 zur einen Seite des Steuerkolbens 13 an den Raum 20 zur anderen Seite des Steuerkolbens angeschlossen. Das heißt die Steuerkammer 19 ist zu beiden Seiten des Steuerkolbens 13 entlüftet.

Das Überströmventil 12 besteht aus zwei parallelgeschalteten Rückschlagventilen 33, 34. Die federbelasteten Ventilteller der Rückschlagventile öffnen in entgegengesetzten Richtungen. Beide Rückschlagventile 33, 34 sind einerseits an die Signaldruckleitung 2 angeschlossen, die mit der Bremsdruckleitung 3 verbunden ist. Andererseits sind die beiden Rückschlagventile 33, 34 über einen Anschlußkanal 35 an den Boden 32 der Steuerkammer 19 angeschlossen. Die Rückschlagventile 33, 34 öffnen bei unterschiedlichen Öffnungsdrücken. Das Rückschlagventil 34 öffnet bei einem Druck in der Signaldruckleitung 2, z. B. 0,6 bar, bei dem die Fahrzeugbremsen sicher angelegt sind. Das Rückschlagventil 33 ist auf einen sehr geringen Differenzdruck z. B. von 0,1 bar ausgelegt, und der Steuerkolben 13 ist derart bemessen, daß er bei einem Druck unterhalb von 0,2 bar schaltet.

Die Schaltvorrichtung 1 aus dem Relaisventil 11 und dem Überströmventil 12 arbeitet wie folgt:

Die Anzeigevorrichtung ist in Fig. 1 im Zustand bei gelöster Bremse dargestellt. Wird über das Bremssteuerventil 17 in die Bremsdruckleitung 3 ein Bremsdruck eingesteuert, so öffnet das eine Rückschlagventil 34 des Überströmventils 12 beispielsweise erst bei einem Druck von 0,6 bar. Das andere Rückschlagventil 33 bleibt geschlossen. Die Bremszylinder mit den anschließenden, nicht dargestellten Bremsgestängen sind derart ausgelegt, daß die Bremsen die einem Druck vcn 0,6 bar in der Bremsluftleitung 3 sicher angelegt sind.

Bei geöffnetem Rückschlagventil 34 geht der Steuerkolben 13 des Relaisventils entgegen der Kraft der Feder 22 in seine zweite Schaltstellung, in der das Ventilrohr 24 das Schaltventil 14 entgegen der das Schaltventil in Schließrichtung belastenden Federkraft in Öffnungsstellung bewegt. Das offene Ende des Ventilrohres 24 wird dabei von der Ventilplatte 28 abgeschlossen. Damit gelangt Druckluft aus dem Hilfsluftbehälter 16 über die Hilfsluftleitung 15, das geöffnete Schaltventil 14 und den Ausgang 6 der Schaltvorrichtung 1 in die Anzeigeleitung 8, über die die beiden Anzeigezylinder 9 und 10 aus ihrer einen Grundstellung bei gelösten Bremsen in ihre andere Grundstellung bei sicher angelegten Bremsen umgeschaltet werden. Hierdurch werden jeweils die roten Schauzeichen hinter die Sichtfenster der Anzeigevorrichtung bewegt, um die Bremsstellung anzuzeigen.

Wird die Bremse wieder gelöst, so wird der Bremsdruck in der Bremsluftleitung 3 über das Bremssteuerventil 17 entlüftet. Hierbei geht das Rückschlagventil 34 in Schließstellung und das Rückschlagventil 33 öffnet bei einem Differenzdruck, bei dem die Bremsen sicher gelöst sind. Der Steuerkolben 13 des Relaisventils 11 ist derart ausgelegt, das er im Beispielsfalle bei einem Druck, der 0,2 bar unterschreitet, durch die Kraft der Feder 22 in seine dargestellte untere Schaltstellung zurückgeht, in der das Schaltventil 14 geschlossen und die Anzeigeleitung 8 über die Ausgangsleitung 7, den Schaltraum 26 und das offene Ende des Ventilrohres 24 entlüftet wird. Die Kolben der Anzeigezylinder 9 und 10 gehen in ihre entlüftete Grundstellung zurück, in der die grünen Schauzeichen vor die Sichtfenster der Anzeigevorrichtung bewegt sind.

In der entlüfteten Schaltstellung des Steuerkolbens 13 werden die Räume zwischen dem Steuerkolben 13 und dem Überströmventil 12 über den Kanal 31 und die Öffnung 30 im Steuerraum 19 entlüftet.

Die Anzeigezylinder werden also entsprechend der Hysterese der Bremsen beim Bremsen z. B. oberhalb von 0,6 bar von « grün » auf « rot » und beim Lösen unterhalb von 0,2 bar von « rot » auf « grün » geschaltet, ohne daß die Schauzeichen eine indifferente Zwischenstellung einnehmen können. Mit Hilfe des Relaisventils 11 werden die Anzeigezylinder 9 und 10 über den Druck des Hilfsluftbehälters 16 sicher geschaltet. Die Schaltvorrichtung 1 besitzt damit eine Schalthysterese, die der Hysterese der Bremsen angepaßt ist. Es ist dadurch sichergestellt, daß die Schauzeichen nur dann auf « grün » oder « rot » gestellt sind, wenn die Bremsen sicher gelöst bzw. sicher eingebremst sind.

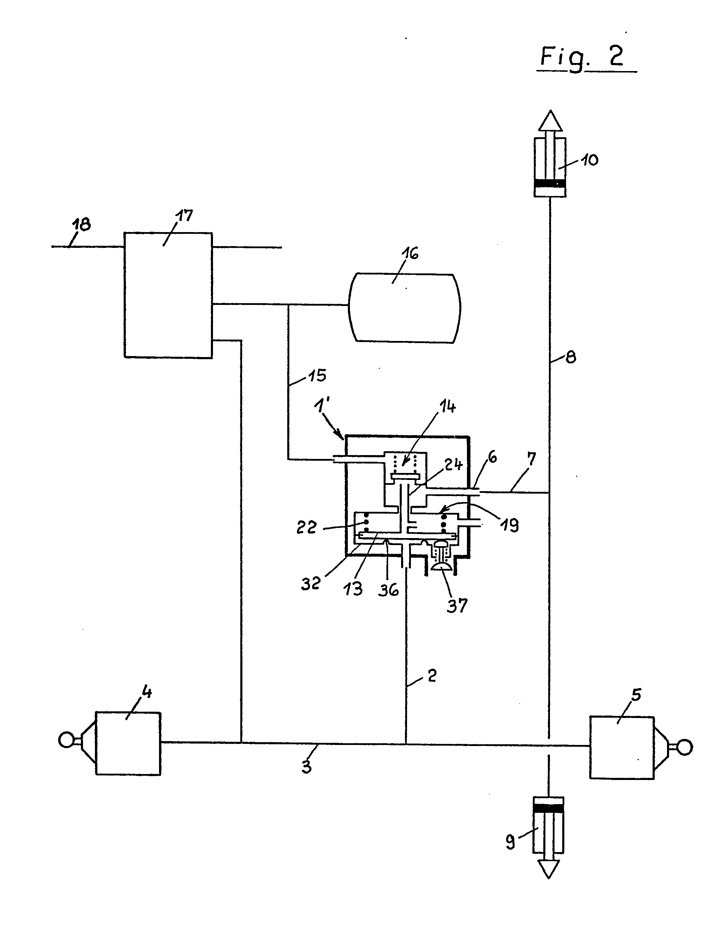

Fig. 2 zeigt eine weitere Ausführung nach der Erfindung Einander entsprechende Teile in den Fig. 1 und 2 sind mit den gleichen Bezugszeichen versehen.

Die Ausführung nach Fig. 2 unterscheidet sich von der Ausführung nach Fig. 1, daß statt des Überströmventils 12 dem Steuerkolben 13 des Relaisventils ein Ventilsitz 36 zugeordnet ist, der im Öffnungsquerschnitt wesentlich kleiner ist als die wirksame Druckfläche des dem Ventilsitz zugewandten Steuerkolbens 13. Der Ventilsitz 36 ist an die Signalleitung 2 angeschlossen. Im Boden 32 des Steuerraumes 19 ist ein Entlüftungsventil 37 angeordnet. In der in Fig. 2 dargestellten, unteren Stellung des Steuerkolbens 13 bei gelöster Bremse und entsprechend druckloser Bremsluftleitung 3 wird der Steuerkolben 13 durch die Feder 22 auf den Ventilsitz 36 gedrückt. Gleichzeitig hält der Steuerkolben 13 das Entlüftungsventil 37 entgegen einer Schließfederkraft in Öffnungsstellung, wodurch der freie Ringraum außerhalb des Ventilsitzes 36 zwischen dem Steuerkammerboden 32 und dem Steuerkolben 13 entlüftet ist.

Das federbelastete Entlüftungsventil 37 gemäß Fig. 2 kann durch einen Kanal 30 mit der Öffnung 31 in der Steuerkammer nach Fig. 1 ersetzt sein. Umgekehrt kann das vom Steuerkolben 13 steuerbare Entlüftungsventil 37 nach Fig. 2 auch in der Ausführung nach Fig. 1 statt des Kanales 30 und der Öffnung 31 verwendet sein.

Die erfindungsgemäße Ausführung nach Fig. 2 arbeitet wie folgt :

Im drucklosen Zustand bei gelöster Bremse nehmen die einzelnen Teile der erfindungsgemäßen Anzeigevorrichtung die in Fig. 2 gezeigte Stellung ein, in der das Schaltventil 14 geschlossen ist und die Anzeigeleitung 8 über die Ausgangsleitung 7 der Schaltvorrichtung 1' und das offene Ventilrohr 24 entlüftet ist.

Beim Anlegen der Bremse wird in die Bremsluftleitung 3 ein Bremsdruck eingesteuert, der über die Signalleitung 2 gegen die Kolbenfläche des Steuerkolbens 13 wirkt, die den Ventilsitz 36 abschließt. Die vom Ventilsitz 36 begrenzte Fläche ist so bemessen, daß der Ventilsitz z. B. erst bei 0,6 bar öffnet, bei dem die Bremsen sicher angelegt sind. Erst nach dem Öffnen des Ventilsitzes entsprechend einem geringen Anheben des Steuerkolbens 13 wird die ganze Fläche des Steuerkolbens mit dem Druck aus der Signalleitung 2 beaufschlagt. Der Steuerkolben 13 geht dabei entgegen der Kraft der Feder 22 in seine zweite Schaltstellung, in der das Entlüftungsventil 37 durch Federkraft geschlossen und das Schaltventil 14 mittels des Ventilrohres 24 in Öffnungsstellung gesteuert ist. Die Anzeigezylinder 9 und 10 werden dadurch mit dem Druck aus dem Hilfsluftbehälter druckbeaufschlagt und schlaten aus ihrer einen Grundstellung in ihre andere Grundstellung um, in der die roten Schauzeichen hinter das Sichtfenster der Anzeigevorrichtung bewegt sind.

Der Steuerkolben 13 mit der Steuerfeder 22 ist so ausgelegt, daß er beim Lösen der Bremse erst z. B. bei einem Bremsdruck unter 0,2 bar in seine in Fig. 2 gezeigte untere Schaltstellung zurückgeht. Entsprechend geht das Schaltventil 14 erst bei einem Bremsdruck unter 0,2 bar in seine Schließstellung, und die Anzeigenzylinder 9 und 10 werden erst bei einem Bremsdruck unter 0,2 bar entlüftet, bei dem die Bremsen sicher gelöst sind.

Auch bei der Ausführung nach Fig. 2 werden die Schauzeichen beim Bremsen erst von « grün » auf « rot » umgeschaltet, wenn die Bremsen sicher angelegt sind. Umgekehrt werden die Schauzeichen beim Lösen der Bremse erst von « rot » auf « grün » umgeschaltet, wenn die Bremsen sicher gelöst sind.

Es ist klar, daß die Steuerkolben 13 nach den beiden Ausführungsbeispielen in Fig. 1 und 2 statt der pneumatischen Schaltventile 14 auch elektrische Schalter zum Ein- und Ausschalten von elektrischen Anzeigevorrichtungen steuern können. Solche elektrischen Anzeigevorrichtungen zeigen bei gelöster Bremse ein grünes Schauzeichen und bei angelegter Bremse ein rotes Schauzeichen. Der die Anzeigevorrichtung steuernde Schalter besitzt zwei Stellungen. In der einen Stellung befindet sich der Schalter bei gelöster Bremse, in der der Steuerkolben 13 die in Fig. 1 bzw. 2 gezeigte Stellung einnimmt. In die andere Stellung bei angelegter Bremse wird der Schalter durch den druckbeaufschalgten Steuerkolben 13 gesteuert. Die elektrischen Anzeigevorrichtungen können z. B. grüne und rote Signallampen beinhalten, die von dem elektrischen Schalter betätigt werden, wobei jeweils nur eine eingeschaltet ist. Statt Signallampen können auch Stellmagnete vorgesehen sein, die die Schauzeichen mechanisch verstellen.

**Ansprüche**

1. Anzeigevorrichtung für druckmittelgesteuerte Fahrzeugbremsen, insbesondere zur Anzeige des Anlegezustandes von Scheibenbremsen für Schienenfahrzeuge, mit wenigstens einer von einem Signaldruck druckmittelgesteuerten Schaltvorrichtung (1, 1') zur Überwachung von zwei verschiedenen Schauzeichen (rot, grün) (9, 10), wobei die Schaltvorrichtung (1, 1') beim Anlegen der Bremsen aus einer ersten Grundstellung (Lösestellung der Bremsen = Schauzeichen grün) in eine zweite Grundstellung (Bremsstellung der Bremsen = Schauzeichen rot) und beim Lösen der Bremsen aus der zweiten Grundstellung in die erste Grundstellung zurückschaltet, dadurch gekennzeichnet, daß die Steuerkennlinie der Schaltvorrichtung (1, 1') im Anzeigenbereich zwischen ihren beiden Grundstellungen eine der Hysterese der Fahrzeugbremse angepaßte Hysterese aufweist, nach der die Schaltvorrichtung (1, 1') beim Anlegen der Bremse bei einem höheren Signaldruck aus ihrer ersten Grundstellung — bei Vermeidung einer indifferenten Zwischenstellung — in ihre zweite Grundstellung umschaltet, aber beim Lösen der Bremse erst bei einem wesentlich niedrigeren Signaldruck — ebenfalls bei Vermeidung einer indifferenten Zwischenstellung — aus ihrer zweiten Grundstellung in ihre erste Grundstellung zurückschaltet.

2. Anzeigevorrichtung nach Anspruch 1, dadurch gekennzeichnet, daß der Schaltvorrichtung (1) ein pneumatisches Überströmventil (12) mit unterschiedlichen Öffnungsdrücken vorgeschaltet ist.

3. Anzeigevorrichtung nach Anspruch 2, dadurch gekennzeichnet, daß das Überströmventil (12) aus zwei parallel an den Signaldruck angeschlossenen, in unterschiedlichen Richtungen öffnenden und bei unterschiedlichen Öffnungsdrücken schaltenden Rückschlagventilen (33, 34) besteht.

4. Anzeigevorrichtung nach Anspruch 2 oder 3, dadurch gekennzeichnet, daß die Schaltvorrichtung (1) aus einem Relaisventil (11) zur Steuerung eines Schaltventils (14) besteht, das zwischen einer Hilfsdruckquelle (16) und wenigstens einem Zylinder (9, 10) zur Steuerung der Schauzeichen geschaltet ist, daß dem Steuerkolben (13) des Relaisventils (11) das Überströmventil (12) vorgeschaltet ist und daß zwischen dem Überströmventil (12) und dem Steuerkolben (13) ein Entlüftungsventil (13, 30) eingeordnet ist, das in der einen Grundstellung der Schaltvorrichtung bei gelösten Bremsen in seine Öffnungsstellung gesteuert ist.

5. Anzeigevorrichtung nach Anspruch 1, dadurch gekennzeichnet, daß die Schaltvorrichtung (1') einen Steuerkolben (13) aufweist, der in der einen Grundstellung der Schaltvorrichtung bei gelöster Bremse auf einen zwei Räume voneinander trennenden Ventilsitz (36) kleineren Durchmessers als der Steuerkolben (13) aufsetzbar ist, wobei einer der beiden Räume ständig mit Signaldruck beaufschlagt und der andere der Räume bei auf dem Ventilsitz (36) aufsitzenden Steuerkolben (13) mittels eines Entlüftungsventils (30, 31 ; 37) entlüftet ist.

6. Anzeigevorrichtung nach Anspruch 5, dadurch gekennzeichnet, daß der vom Ventilsitz (36) umgebene innere Raum von Signaldruck beaufschlagt ist.

7. Anzeigevorrichtung nach Anspruch 4, 5 oder 6, dadurch gekennzeichnet, daß der Steuerkolben (13) das Entlüftungsventil (30, 31 ; 37) steuert.

8. Anzeigevorrichtung nach Anspruch 7, dadurch gekennzeichnet, daß der Steuerkolben (13) auf seiner einen Kolbenseite, die der vom Signaldruck beaufschlagten Kolbenseite abgewandt liegt, von einer Feder (22) in einem entlüfteten Raum beaufschlagt ist, und daß eine Entlüftungsbohrung (30, 31) vorgesehen ist, die einerseits in den mittels des Entlüftungsventils zu entlüftenden Raum und andererseits in die Zylinderlauffläche für den Steuerkolben, von diesem überschleifbar, einmündet, wobei diese Einmündung (30) in der der einen Grundstellung der Schaltvorrichtung bei gelösten Bremsen entsprechenden Stellung des Steuerkolbens (13) mit dem die Feder aufnehmenden Raum kommuniziert, und in den anderen Stellungen des Steuerkolbens von diesem unter Absperrung dieser Verbindung überschliffen ist.

9. Anzeigevorrichtung nach Anspruch 7, dadurch gekennzeichnet, daß das Entlüftungsventil (37) als vom Steuerkolben (13) schaltbares, nur in dessen der Grundstellung der Schaltvorrichtung bei gelösten Bremsen entsprechender Stellung geöffnetes Hubventil ausgebildet ist.

10. Anzeigevorrichtung nach 5, dadurch gekennzeichnet, daß der Steuerkolben (13) zu einem Relaisventil gehört, das ein vom Steuerkolben überwachtes Schaltventil (14) zwischen einer Hilfsdruckquelle (16) und wenigstens einem Zylinder (9, 10) zur Steuerung der Schauzeichen aufweist.

**Claims**

1. Indicating device for fluid-controlled vehicle brakes, especially for indicating the application state of disc brakes for rail vehicles, comprising at least one switching device (1, 1') with fluid control by a signal pressure for monitoring two different visual signs (red, green) (9, 10), the switching device (1, 1') being moved in response to brake application from a first basic position (brake release position = visual sign green) to a second basic position (braking position = visual sign red) and being returned in response to brake release from the second basic position to the first basic position, wherein in the indicating range between its two basic positions the control characteristic of the switching device (1, 1') features a hysteresis which is matched to the hysteresis of the vehicle brake and whereby the switching device (1, 1') changes over in response to brake application from its first basic position — while avoiding an indifferent intermediate position — to its second basic position at a relatively high signal pressure, but switches back in response to brake release from its second basic position to its first basic position at a substantially lower signal pressure — while again avoiding an indifferent intermediate position.

2. Indicating device as defined in Claim 1, wherein a pneumatic bypass valve (12) with differing opening pressures is inserted upstream of the switching device (1).

3. Indicating device as defined in Claim 2, wherein the bypass valve (12) consists of two check valves (33, 34) which are connected in parallel to the signal pressure and which open in different directions and operate at different opening pressures.

4. Indicating device as defined in Claim 2 or Claim 3, wherein the switching device (1) consists of a relay valve (11) for controlling a pilot valve (14) which is inserted between an auxiliary pressure source (16) and at least one cylinder (9, 10) for controlling the visual signs, wherein the bypass valve (12) is connected upstream of the control piston (13) of the relay valve (11) and wherein there is between the bypass valve (12) and the control piston (13) an exhaust valve (13, 30) which, at one of the basic positions of the switching device and with the brakes released, is controlled to its open position.

5. Indicating device as defined in Claim 1, wherein the switching device (1') features a control piston (13) which, at one of the basic positions of the switching device and with the brake released, can be positioned on a valve seat (36) which separates two chambers and is of smaller diameter than the control piston (13), one of the two chambers being exposed constantly to signal pressure, while the other chamber is exhausted by means of an exhaust valve (30, 31 ; 37) when the control piston (13) is positioned on the valve seat (36).

6. Indicating device as defined in Claim 5, wherein the signal pressure is applied to the inner chamber surrounded by the valve seat (36).

7. Indicating device as defined in Claim 4, Claim 5 or Claim 6, wherein the control piston (13) controls the exhaust valve (30, 31 ; 37).

8. Indicating device as defined in Claim 7, wherein at its side facing away from that side exposed to the signal pressure, the control piston (13) is loaded by a spring (22) in an exhausted chamber, and wherein there is provided an exhaust bore (30, 31) which discharges on the one hand into the chamber to be exhausted by means of the exhaust valve and on the other hand, coverably by the control piston, into the cylinder running surface for this control piston, the said discharge opening (30) communicating, at the control piston position corresponding to one of the basic positions of the switching device with the brakes released, with the chamber accommodating the spring and being covered, at the other positions of the control piston, by the said control piston so as to stop the said communication.

9. Indicating device as defined in Claim 7, wherein the exhaust valve (37) is designed as a lifting valve which is operable by the control piston (13) and which is open only at the control piston position corresponding to the basic position of the switching device with the brakes released.

10. Indicating device as defined in Claim 5, wherein the control piston (13) belongs to a relay valve which, for the purpose of controlling the visual signs, exhibits a pilot valve (14) monitored by the control piston and positioned between an auxiliary pressure source (16) and at least one cylinder (9, 10).

## Revendications

1. Dispositif indicateur pour des freins de véhicules à commande par un milieu sous pression, notamment pour indiquer l'état d'application des freins à disques pour des véhicules sur rails, comportant au moins un dispositif de commutation (1, 1') commandé par le milieu sous pression, d'une pression de signal en vue du contrôle de deux voyants différents (rouge, vert) (9, 10), du type dans lequel le dispositif de commutation (1, 1') est ramené, lors de l'application des freins, d'une première position de base (position de desserrage des freins = voyant vert) dans une seconde position de base (position de freinage des freins = voyant rouge) et, lors du desserrage des freins de la seconde position de base à la première position de base, caractérisé par le fait que la courbe caractéristique de la commande du dispositif de commutation (1, 1') présente, dans la plage indicatrice située entre ses deux positions de base, une hystérèse adaptée à l'hystérèse du frein du véhicule, après laquelle le dispositif de commutation (1, 1') passe, lors de l'application du frein et pour une pression de signal plus élevée, de sa première position de base, à sa seconde position de base, en évitant une position intermédiaire indifférente, mais repasse, lors du desserrage du frein et seulement pour une pression de signal notablement plus faible, de sa seconde position de base à sa première position de base, en évitant également une position intermédiaire indifférente.

2. Dispositif indicateur selon la revendication 1, caractérisé par le fait qu'en amont du dispositif de commutation (1) est montée une soupape de décharge pneumatique (12) à différentes pressions d'ouverture.

3. Dispositif indicateur selon la revendication 2, caractérisé par le fait que la soupape de décharge (12) est constituée par deux soupapes de retenue (33, 34) montées en parallèle à la pression du signal, s'ouvrant dans des sens différents et commutées par des pressions d'ouverture différentes.

4. Dispositif indicateur selon la revendication 2 ou 3, caractérisé par le fait que le dispositif de commutation (1) est constitué par une soupape de relais (11) pour la commande d'une soupape de commutation (14) montée entre une source de pression auxiliaire (16) et au moins un cylindre (9, 10) pour la commande du voyant, qu'en amont du dispositif (13) de la soupape de relais (11) est montée la soupape de décharge (12), et qu'entre la soupape de décharge (12) et le piston de commande (13) est insérée une soupape de mise à l'atmosphère (13, 30) qui est commandée, pour une position de base du dispositif de commutation et lorsque les freins sont desserrés, dans sa position d'ouverture.

5. Dispositif indicateur selon la revendication 1, caractérisé par le fait que le dispositif de commutation (1') comporte un piston de commande (13) qui, dans une première position de base du dispositif de commutation, est susceptible, dans le cas des freins desserrés, d'être appliqué sur un siège de soupape (36) de plus faible diamètre que le piston de commande (13) et séparant entre elles deux chambres, alors que l'une des deux chambres est chargée en permanence avec la pression de signal et l'autre de ces chambres est reliée à l'atmosphère à l'aide d'une soupape de mise à l'atmosphère (30, 31 ; 37) lorsque le piston de commande (13) porte contre le siège de soupape (36).

6. Dispositif indicateur selon la revendication 5, caractérisé par le fait que la chambre intérieure qui est entourée par le siège de soupape (36) est chargée par la pression de signal.

7. Dispositif indicateur selon la revendication 4, 5 ou 6, caractérisé par le fait que le piston de commande (13) contrôle la soupape de mise à l'atmosphère (30, 31 ; 37).

8. Dispositif indicateur selon la revendication 7, caractérisé par le fait que le piston de commande (13) est chargé sur son côté de piston qui est éloigné du piston qui est soumis à la pression de signal, par un ressort (22) situé dans une chambre reliée à l'atmosphère, et qu'il est prévu un perçage de mise à l'atmosphère (30, 31) qui débouche, d'une part, dans la chambre qui est à relier à l'atmosphère par l'intermédiaire de la soupape de mise à l'atmosphère et, d'autre part, dans la surface cylindrique de déplacement pour le piston de commande qui peut passer sur cette embouchure, cette dernière (30) communiquant, dans la position du piston de commande (13) qui correspond à la position de base du dispositif de commutation pour freins desserrés, avec la chambre qui reçoit le ressort et étant balayée, dans les autres positions du piston de commande, par ce dernier, avec fermeture de cette liaison.

9. Dispositif indicateur selon la revendication 7, caractérisé par le fait que la soupape de mise à l'atmosphère (37) est réalisée sous la forme d'une soupape de levage, commutable par le piston de commande (13) et ouverte seulement dans sa position qui correspond à la position de base du dispositif de commutation associée aux freins desserrés.

10. Dispositif indicateur selon la revendication 5, caractérisé par le fait que le piston de commande (13) fait partie d'une soupape de relais qui comporte une soupape de commutation (14) contrôlée par le piston de commande et située entre une source de pression auxiliaire (16) et au moins un cylindre (9, 10) pour la commande du voyant.

_Fig. 1_

Fig. 2